# EUROPÄISCHE PATENTSCHRIFT

(11) **EP 2 870 446 B1**
(45) Veröffentlichungstag und Bekanntmachung des Hinweises auf die Patenterteilung: **28.02.2018**
(21) Anmeldenummer: 13716324.2
(22) Anmeldetag: 17.04.2013
(51) Int. Cl.: G01L 5/00, B60R 21/0136, B60R 21/34

(54) **FAHRZEUG MIT EINEM FUSSGÄNGERSCHUTZSYSTEM**
VEHICLE WITH A PEDESTRIAN PROTECTION SYSTEM
VÉHICULE AVEC UN SYSTÈME DE PROTECTION DES PIÉTONS

(30) Priorität: 06.07.2012 DE 102012013327
(43) Veröffentlichungstag der Anmeldung: 13.05.2015
(73) Patentinhaber: Volkswagen Aktiengesellschaft, 38440 Wolfsburg (DE)
(72) Erfinder: GAAS, Thorsten, 29386 Dedelstorf-Repke (DE); PLÖGER, Ricardo, 38448 Wolfsburg (DE); LESCHKE, Andre, 38448 Wolfsburg (DE); STRUTZ, Torsten, 38442 Wolfsburg (DE); HACKENBERG, Ulrich, 85139 Wettstetten (DE)
(86) Internationale Anmeldenummer: PCT/EP2013/058004
(87) Internationale Veröffentlichungsnummer: WO 2014/005733

(56) Entgegenhaltungen:
- DE-A1-102004 003 199
- DE-A1-102004 009 301
- JP-A- 2011 137 743
- US-A1- 2001 028 163
- US-A1- 2011 232 396

## Beschreibung

Die Erfindung betrifft ein Fahrzeug mit einem Fußgängerschutzsystem, wobei das Fahrzeug einen Querträger und eine Stoßfängerverkleidung umfasst. Ferner umfasst das Fahrzeug mindestens einen einen Aufprall erfassenden Sensor und ein Deformationselement, die zwischen einem Querträger und einer Stoßfängerverkleidung des Fahrzeugs angeordnet sind, und eine die Signale des mindestens einen Sensors auswertenden Steuereinheit. Dabei ist Deformationselement als verformbarer Körper mit einem Hohlraum ausgebildet, wobei durch eine Deformation des Deformationselementes auch der Hohlraum in seiner räumlichen Gestalt verändert wird und dies zu einer Änderung eines elektromagnetischen Feldes in dem Hohlraum führt.

Eine derartiges Fahrzeug mit einem Fußgängerschutzsystem lässt sich der DE 10 2004 003199 A1 entnehmen. Weitere Fußgängerschutzsysteme sind aus der DE 10 2004 009 301 A1 und der DE 103 60 138 A1 bekannt.

Bei der in der DE 10 2004 009 301 A1 offenbarten Ausführungsform ist eine Stoßfängerverkleidung vor einem Schaumstoff und einem Querträger des Fahrzeugs angeordnet. An der Stoßfängerverkleidung sind Beschleunigungssensoren zwischen der Stoßfängerverkleidung und dem Schaumstoff beziehungsweise dem Querträger angebracht. Die Signale der Beschleunigungssensoren werden in einer Steuereinheit ausgewertet. Im Falle eines Aufpralles eines Fußgängers auf das Fahrzeug werden Fußgängerschutzfunktionen, wie zum Beispiel ein Außenairbag, angesteuert, um die Unfallfolgen für den Fußgänger zu mindern.

Ein wesentliches Merkmal dieses vorbekannten Fußgängerschutzsystems ist in dem Einbauort der Beschleunigungssensoren hinter der Stoßfängerverkleidung zu sehen. Durch diese Lage befinden sich die Beschleunigungssensoren dicht an einem möglichen Auftreffpunkt des Fußgängers, so dass deren Signalstärken bei einem Fußgängerunfall deutlich zunehmen und eine zuverlässige Erfassung der Beschleunigungssignale möglich ist.

Bei der in der DE 103 60 138 A1 offenbarten Ausführungsform ist eine Stoßfängerverkleidung vor einem Schaumstoff und einem Querträger des Fahrzeugs angeordnet. Zwischen dem Querträger und dem Schaumstoff sind piezoelektrische Kollisionserkennungssensoren angeordnet. Im Falle eines Aufpralles eines Fußgängers auf die Stoßfängerverkleidung überträgt sich der Druck über den Schaumstoff auf die piezoelektrischen Kollisionserkennungssensoren und erzeugt eine elektrische Spannung, die als Signal ausgewertet werden kann. In Abhängigkeit dieses Signals steuert eine Steuereinheit Fußgängerschutzfunktionen.

Ein wesentliches Merkmal dieses vorbekannten Fußgängerschutzsystems ist in der Verwendung piezoelektrischer Kollisionserkennungssensoren zu sehen. Bei diesen Sensoren lassen sich Spannungen abbauen, die beispielsweise durch eine Vorschädigung der Sensoraufnahmeflächen entstehen und die Kollisionserkennung beeinträchtigen könnten.

Die vorgenannten Ausführungsformen benötigen den Schaumstoff hinter der Stoßfängerverkleidung als Deformationselement, um den Aufprall des Fußgängers abzumildern, oder als Kraftübertragungselement, um die Kraft des Aufpralls auf die Sensoren zu übertragen. Um diese Wirkungen zu erzielen, ist ein hinreichend großes Schaumstoffvolumen nötig.

Aus der US 2001/0028163 A1 ist ferner eine Kollisionssensor bekannt, der bestimmt, ob ein Fahrzeuginsassen-Rückhaltesystem auszulösen ist. Schließlich ist aus der US 2011/0232396 A1 ein weiterer Kollisionssensor bekannt.

Der Erfindung liegt die Aufgabe zugrunde, den benötigten Platzbedarf des eingangs beschriebenen Fußgängerschutzsystems zu reduzieren.

Diese Aufgabe wird erfindungsgemäß dadurch gelöst, dass das Deformationselement als metallischer Käfig ausgebildet ist, in dem der mindestens eine Sensor in dem Hohlraum angeordnet ist und Änderungen eines elektromagnetischen Feldes in dem Hohlraum erfasst. Weitere vorteilhafte Merkmale der Erfindung sind Gegenstand der Unteransprüche und Figurenbeschreibung.

Erfindungsgemäß wird somit das Deformationselement bei einem Zusammenstoß mit einem Kollisionsobjekt, insbesondere einem Fußgänger, verformt. Durch das Verformen des Deformationselementes wird Bewegungsenergie in Deformationsenergie umgewandelt, um die Unfallfolgen für den Fußgänger und die Insassen abzumildern. Ein wirksames Abmildern der Unfallfolgen wird zweckmäßig durch eine geeignete Wahl des Materials (auch Materialzusammensetzungen kommen in Betracht) und eine geeignete Dimensionierung erreicht. Durch die Deformation des Deformationselementes wird auch der Hohlraum in seiner räumlichen Gestalt (Form und/oder Volumen) verändert. Dies führt zu einer Änderung des elektromagnetischen Feldes in dem Hohlraum. Unter einem elektromagnetischen Feld ist auch ein elektrisches Feld oder ein magnetisches Feld zu verstehen. Diese Änderung wird mit dem mindestens einen Sensor erfasst und die daraus entstehenden Signale von der Steuereinheit ausgewertet. Ein besonderer Vorteil des erfindungsgemäßen Fußgängerschutzsystems liegt darin, dass auf den sehr viel Raum einnehmenden Schaumstoff verzichtet werden kann, ohne die Wirksamkeit des Fußgängerschutzes zu vermindern. Dies ist besonders bei kleineren Fahrzeugen nützlich, bei denen sonst nicht ausreichend Raum vorhanden ist, um ein wirksames Fußgängerschutzsystem einzubauen. Zudem hat ein geringerer Platzbedarf auch Vorteile für das Design und die Kosten. So kann etwa der Überhang verkürzt werden, was nicht nur geringere Materialkosten mit sich bringt, sondern auch mehr Freiraum für das Design.

Eine Änderung des elektromagnetischen Feldes lässt sich zuverlässig erfassen, wenn der mindestens eine Sensor als kapazitiver oder induktiver Sensor ausgebildet ist. Mit kapazitiven Sensoren lässt sich insbesondere eine elektrische Feldkomponente überwachen, mit induktiven Sensoren eine magnetische Feldkomponente. Kapazitive Sensoren arbeiten zudem auch dann zuverlässig, wenn elektrisch nicht oder nur schwach leitfähiges Material, insbesondere ein Dielektrikum, in das elektromagnetische Feld eindringt. Dies ist beispielsweise möglich, wenn das Deformationselement aus einem dielektrischen Material hergestellt ist.

Erfindungsgemäß ist das Deformationselement als metallischer Käfig ausgebildet. Der Einsatz metallischer Materialien, beispielsweise Blech, ermöglicht es einerseits, alternativ oder ergänzend zu kapazitiven Sensoren induktive Sensoren zum Erfassen der Änderung des elektromagnetischen Feldes einzusetzen. Andererseits weist ein metallischer Käfig eine hohe Energieabsorptionsfähigkeit und Nachgiebigkeit im Falle eines Aufpralls auf. Als besonders vorteilhaft hat es sich gezeigt, den metallischen Käfig mit schlitzförmigen Öffnungen auszubilden.

Ein besonders zuverlässiger Einbau des Deformationselementes wird erreicht, wenn das Deformationselement an dem Querträger befestigt ist. Weist das Deformationselement eine große Öffnung auf, so wird das Deformationselement zweckmäßigerweise so an dem Querträger befestigt, dass der Rand der großen Öffnung an dem Querträger anliegt.

Die Verletzungsgefahr und gegebenenfalls die Unfallfolgen für den Fußgänger bei einem Aufprall auf das Fahrzeug lassen sich vermindern, wenn die Steuereinheit ausgebildet ist, Fußgängerschutzfunktionen des Fahrzeugs in Abhängigkeit der Signale des mindestens einen Sensors auszulösen. Als auszulösende Fußgängerschutzfunktion ist vorteilhafterweise eine Funktion zum Anheben der Frontklappe des Fahrzeugs vorgesehen, eine sogenannte aktive Frontklappe beziehungsweise Motorhaube. Als weitere auszulösende Fußgängerschutzfunktion ist beispielsweise auch ein Scheibenairbag denkbar.

Die Änderung des elektromagnetischen Feldes lässt sich besonders zuverlässig erfassen, insbesondere auch räumlich und/oder zeitlich aufgelöst, wenn mehrere eine elektromagnetische Feldänderung erfassende Sensoren in dem Hohlraum angeordnet sind, deren Signale von der Steuereinheit ausgewertet werden. Beispielsweise können diese Sensoren entlang des Querträgers, insbesondere in gleichen Abständen, angeordnet sein. So lässt sich ermitteln, ob ein Zusammenstoß auf der rechten Seite, in der Mitte oder auf der linken Seite des Fahrzeugs stattgefunden hat. Auf diese Weise können auf den Zusammenstoßpunkt abgestimmte Fußgängerschutzfunktionen gezielt angesteuert werden.

Zweckmäßigerweise ist die Steuereinheit ausgebildet, Signale von weiteren Sensoren zu empfangen und auszuwerten, um Signale unterschiedlicher Sensoren zu verifizieren. So lassen sich fehlerhafte Signale erkennen und herausfiltern. Zudem ergibt sich so die Möglichkeit, Beschädigungen oder Fehlfunktionen von Sensoren zu diagnostizieren und zu beheben. Ein weiterer Sensor könnte etwa als Kamera ausgebildet sein, gegebenenfalls mit einer entsprechenden Bildverarbeitungseinheit. Vorteilhafterweise ist die Steuereinheit ausgebildet, Fußgängerschutzfunktionen des Fahrzeugs in Abhängigkeit der Signale des mindestens einen Sensors und der Signale der weiteren Sensoren auszulösen.

In der Zeichnung ist eine als Beispiel dienende Ausführungsform der Erfindung dargestellt. Es zeigen:
- Figur 1: in Seitenansicht eine schematische Darstellung des Fußgängerschutzsystems vor einem Zusammenstoß mit einem Fußgänger und
- Figur 2: in Seitenansicht eine schematische Darstellung des Fußgängerschutzsystems aus Figur 1 nach dem Zusammenstoß.

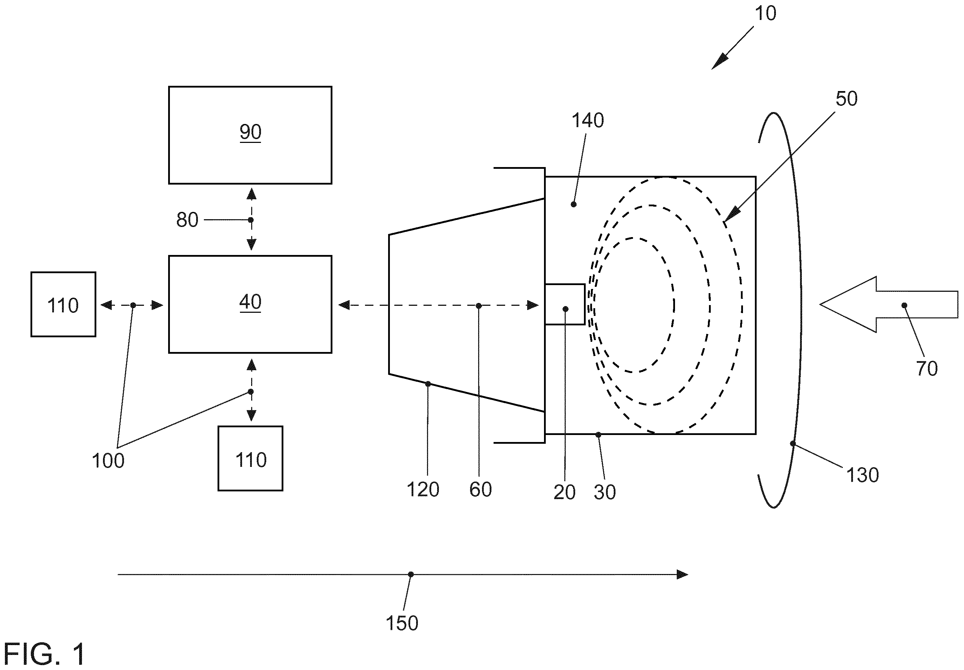

Figur 1 zeigt ein erfindungsgemäßes Fußgängerschutzsystem 10. Das Fußgängerschutzsystem 10 weist einen kapazitiven Sensor 20, ein Deformationselement 30 und eine Steuereinheit 40 auf.

Der Sensor 20 überwacht ein elektrisches Feld 50, das von dem Sensor 20 erzeugt wird. Das elektrische Feld 50 ändert sich im unfallfreien Betrieb des nicht näher dargestellten Fahrzeugs, in dem das Fußgängerschutzsystem 10 eingebaut ist, nicht. Der kapazitive Sensor 20 ist über eine bidirektionale Datenleitung 60, beispielsweisen einen CAN-Bus (CAN: Controller Area Network), mit der Steuereinheit 40 verbunden. Der kapazitive Sensor 20 überträgt seine Signale über die Datenleitung 60 an den kapazitiven Sensor. Über die Datenleitung 60 ist die Steuereinheit 40 in der Lage, Steuersignale an den Sensor 20 zu übertragen. Solche Steuersignale dienen etwa folgenden Zwecken: Sensor 20 aktivieren; Sensor 20 deaktivieren; Sensor 20 diagnostizieren; elektrisches Feld 50 ändern, um die Feldstärke an geänderte Umgebungsbedingungen anzupassen.

Die Steuereinheit 40 wertet die empfangenen Signale des Sensors 20 aus und entscheidet, ob ein Zusammenstoß mit einem Kollisionsobjekt 70, insbesondere einem Fußgänger, stattgefunden hat. Im vorliegenden Fall hat sich noch kein Zusammenstoß ereignet.

Die Steuereinheit 40 ist über eine bidirektionale Datenleitung 80 mit einer aktiven Frontklappe 90 verbunden, die - wie beispielsweise auch ein Scheibenairbag - eine auszulösende Fußgängerschutzfunktion darstellt. Die aktive Frontklappe 90 ist derart ausgebildet, dass sie im Falle eines Steuersignals von der Steuereinheit 40 aufgestellt werden kann, um die Verletzungsfolgen für den Fußgänger bei einem Aufprall auf das Fahrzeug abzumildern. Die aktive Frontklappe 90 kann über die Datenleitung 80 auch Signale an die Steuereinheit 40 senden. Solche Signale betreffen beispielsweise die Information, ob die aktive Frontklappe 90 einsatzbereit ist oder eine Fehlfunktion vorliegt. Im Falle einer Fehlfunktion kann der Fahrer so frühzeitig auf diese Fehlfunktion hingewiesen und in die Lage versetzt werden, die aktive Frontklappe 90 reparieren zu lassen. Der Hinweis an den Fahrer erfolgt zweckmäßig über eine Anzeigeeinrichtung in dem Fahrzeug, beispielsweise auf der Anzeige eines Kombiinstrumentes oder Infotainmentsystems.

Die Steuereinheit 40 ist über bidirektionale Datenleitungen 100 mit weiteren Sensoren 110 verbunden. Die weiteren Sensoren 110 dienen wie der Sensor 20 dazu, einen Zusammenstoß mit einem Kollisionsobjekt 70 zu erfassen. Als weitere Sensoren 110 kommen insbesondere in Betracht: Optische Kameras, Infrarotsensoren, Nahfeld-Radarsensoren, Ultraschallsensoren, Kontaktsensoren, Beschleunigungssensoren, Kontaktsensoren, Druckschlauchsensoren. Die Steuereinheit 40 ist ausgebildet, die Signale der weiteren Sensoren 110 und des Sensors 20 zusammenzuführen und auswerten. Durch diese sogenannte Sensordatenfusion, bei der bewusst redundante Daten berücksichtigt werden, lässt sich die Zuverlässigkeit der Erfassung eines Zusammenstoßes erhöhen. So ist es beispielsweise möglich, auch dann noch sicher einen Zusammenstoß zu erfassen, wenn ein Sensor ausfällt oder ein fehlerhaftes Signal sendet.

Das Deformationselement 30 ist als geschlitzter Blechkäfig ausgeführt und zwischen einem Querträger 120 und einer Stoßfängerverkleidung 130 des Fahrzeugs angeordnet. Dabei ist das Deformationselement 30 an dem Querträger 120 befestigt. Es ist zu erkennen, dass das Deformationselement 30 einen Hohlraum 140 aufweist, in dem der Sensor 20 angeordnet ist, und zwar im hinteren Teil des Hohlraumes 140, bezogen auf die Fahrtrichtung und Fahrzeuglängsachse, die durch einen Pfeil 150 angedeutet sind.

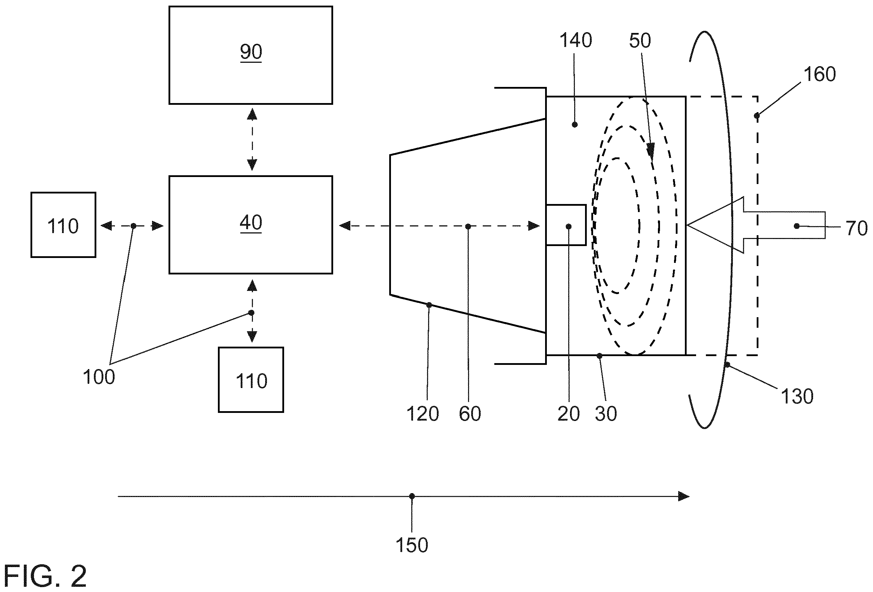

Figur 2 zeigt das Fußgängerschutzsystem 10 aus Figur 1 nach einem Zusammenstoß mit dem Kollisionsobjekt 70.

Es ist zu erkennen, dass das Deformationselement 30 durch den Zusammenstoß mit dem Kollisionsobjekt 70 gestaucht worden ist. Eine gestrichelte Linie 150 deutet die vordere Kontur des Deformationselementes 30 vor dem Zusammenstoß an.

Die Stauchung des Deformationselementes 30 hat zu einer Änderung des elektrischen Feldes 50 geführt. Diese Änderung wird von dem Sensor 20 erfasst, der daraufhin entsprechende Signale über die Datenleitung 60 an die Steuereinheit 40 sendet. Die Steuereinheit 40 gleicht daraufhin diese Signale mit den Signalen der weiteren Sensoren 110 ab. Vorliegend kommt die Steuereinheit 40 zu dem Ergebnis, dass ein Zusammenstoß mit einem Fußgänger an der Vorderfront des Fahrzeugs stattgefunden hat und sendet ein Signal zum Aufstellen an die aktive Frontklappe 90. Die aktive Frontklappe 90 stellt sich daraufhin in einer vorbestimmten Weise auf, um den Fußgänger abzufangen. Beispielsweise wird die aktive Frontklappe 90 zehn bis zwanzig Zentimeter aufgestellt. Es ist auch möglich, das Aufstellen der aktiven Frontklappe 90 von der aktuellen Geschwindigkeit des Fahrzeugs abhängig zu machen und die aktive Frontklappe 90 beispielsweise nur bei Geschwindigkeiten zwischen zwanzig km/h und fünfundfünfzig km/h aufstellen zu lassen.

### Bezugszeichen

- 10: Fußgängerschutzsystem
- 20: Sensor
- 30: Deformationselement
- 40: Steuereinheit
- 50: Elektrisches Feld
- 60: Datenleitung
- 70: Kollisionsobjekt
- 80: Datenleitung
- 90: Aktive Frontklappe
- 100: Datenleitungen
- 110: Weitere Sensoren
- 120: Querträger
- 130: Stoßfängerverkleidung
- 140: Hohlraum
- 150: Pfeil
- 160: Linie

## Patentansprüche

1. Fahrzeug mit einem Fußgängerschutzsystem, wobei das Fahrzeug einen Querträger (120) und eine Stoßfängerverkleidung (130) umfasst, mit mindestens einem einen Aufprall erfassenden Sensor (20) und einem Deformationselement (30), die zwischen dem Querträger (120) und der Stoßfängerverkleidung (130) des Fahrzeugs angeordnet sind, und mit einer die Signale des mindestens einen Sensors (20) auswertenden Steuereinheit (40), wobei das Deformationselement (30) als verformbarer Körper mit einem Hohlraum (140) ausgebildet ist, wobei durch eine Deformation des Deformationselementes (30) auch der Hohlraum (140) in seiner räumlichen Gestalt verändert wird und dies zu einer Änderung eines elektromagnetischen Feldes (50) in dem Hohlraum (140) führt,
**dadurch gekennzeichnet dass,**
das Deformationselement (30) als metallischer Käfig ausgebildet ist, wobei
der mindestens eine Sensor (20) in dem Hohlraum (140) angeordnet ist und die Änderung des elektromagnetischen Feldes (50) in dem Hohlraum (140) erfasst.

2. Fahrzeug nach Anspruch 1, **dadurch gekennzeichnet, dass** der mindestens eine Sensor (20) als kapazitiver oder induktiver Sensor ausgebildet ist, mit dem sich eine Änderung eines elektromagnetischen Feldes (50) erfassen lässt.

3. Fahrzeug nach einem der vorstehenden Ansprüche, **dadurch gekennzeichnet, dass** das Deformationselement (30) an dem Querträger (120) des Fahrzeugs befestigt ist.

4. Fahrzeug nach einem der vorstehenden Ansprüche, **dadurch gekennzeichnet, dass** die Steuereinheit (40) ausgebildet ist, Fußgängerschutzfunktionen des Fahrzeugs in Abhängigkeit der Signale des mindestens einen Sensors (20) auszulösen.

5. Fahrzeug nach Anspruch 4, **dadurch gekennzeichnet, dass** als Fußgängerschutzfunktion eine Funktion zum Anheben der Frontklappe (90) des Fahrzeugs und/oder zum Auslösen eines Scheibenairbags vorgesehen ist.

6. Fahrzeug nach einem der vorstehenden Ansprüche, **dadurch gekennzeichnet, dass** mehrere eine elektromagnetische Feldänderung erfassende Sensoren (20) in dem Hohlraum (140) angeordnet sind, deren Signale von der Steuereinheit (40) ausgewertet werden.

7. Fahrzeug nach einem der vorstehenden Ansprüche, **dadurch gekennzeichnet, dass** die Steuereinheit (40) ausgebildet ist, Signale von weiteren Sensoren (110) zu empfangen und auszuwerten.

8. Fahrzeug nach Anspruch 7, **dadurch gekennzeichnet, dass** die Steuereinheit (40) ausgebildet ist, Fußgängerschutzfunktionen des Fahrzeugs in Abhängigkeit der Signale des mindestens einen Sensors (20) und der Signale der weiteren Sensoren (110) auszulösen.

## Claims

1. Vehicle having a pedestrian protection system, wherein the vehicle comprises a crossmember (120) and a bumper covering (130), with at least one sensor (20) which detects an impact and with a deformation element (30) which are arranged between the crossmember (120) and the bumper covering (130) of the vehicle, and with a control unit (40) which evaluates the signals of the at least one sensor (20), wherein the deformation element (30) is in the form of a deformable body having a hollow space (140), wherein the physical shape of the hollow space (140) is also changed by the deformation of the deformation element (30) and this leads to a change in an electromagnetic field (50) in the hollow space (140), **characterized in that** the deformation element (30) is in the form of a metal cage, wherein the at least one sensor (20) is arranged in the hollow space (140) and detects the change in the electromagnetic field (50) in the hollow space (140).

2. Vehicle according to Claim 1, **characterized in that** the at least one sensor (20) is in the form of a capacitive or inductive sensor with which a change in an electromagnetic field (50) can be detected.

3. Vehicle according to either of the preceding claims, **characterized in that** the deformation element (30) is fastened to the crossmember (120) of the vehicle.

4. Vehicle according to one of the preceding claims, **characterized in that** the control unit (40) is designed to trigger pedestrian protection functions of the vehicle depending on the signals of the at least one sensor (20).

5. Vehicle according to Claim 4, **characterized in that** a function for raising the bonnet (90) of the vehicle and/or for triggering a windscreen airbag is provided as the pedestrian protection function.

6. Vehicle according to one of the preceding claims, **characterized in that** a plurality of sensors (20) which detect a change in an electromagnetic field are arranged in the hollow space (140), the signals of said sensors being evaluated by the control unit (40).

7. Vehicle according to one of the preceding claims, **characterized in that** the control unit (40) is designed to receive and to evaluate signals from further sensors (110).

8. Vehicle according to Claim 7, **characterized in that** the control unit (40) is designed to trigger pedestrian protection functions of the vehicle depending on the signals of the at least one sensor (20) and the signals of the further sensors (110).

## Revendications

1. Véhicule équipé d'un système de protection des piétons, le véhicule comportant une traverse (120) et un habillage de pare-chocs (130), comprenant au moins un capteur (20) qui détecte une collision et un élément de déformation (30), lesquels sont disposés entre la traverse (120) et l'habillage de pare-chocs (130) du véhicule, et comprenant une unité de commande (40) qui interprète les signaux de l'au moins un capteur (20), l'élément de déformation (30) étant réalisé sous la forme d'un corps déformable pourvu d'un espace creux (140), la structure spatiale de l'espace creux (140) étant elle aussi modifiée par une déformation de l'élément de déformation (30) et cela donnant lieu à une modification d'un champ électromagnétique (50) dans l'espace creux (140),
**caractérisé en ce que**
l'élément de déformation (30) est réalisé sous la forme d'une cage métallique,
l'au moins un capteur (20) étant disposé dans l'espace creux (140) et détectant la modification du champ électromagnétique (50) dans l'espace creux (140).

2. Véhicule selon la revendication 1, **caractérisé en ce que** l'au moins un capteur (20) est réalisé sous la forme d'un capteur capacitif ou inductif, lequel permet de détecter une modification d'un champ électromagnétique (50).

3. Véhicule selon l'une des revendications précédentes, **caractérisé en ce que** l'élément de déformation (30) est fixé à la traverse (120) du véhicule.

4. Véhicule selon l'une des revendications précédentes, **caractérisé en ce que** l'unité de commande (40) est configurée pour déclencher des fonctions de protection des piétons du véhicule en fonction des signaux de l'au moins un capteur (20).

5. Véhicule selon la revendication 4, **caractérisé en ce que** la fonction de protection des piétons prévue est une fonction de levage du capot avant (90) du véhicule et/ou de déclenchement un coussin gonflable de sécurité de vitre.

6. Véhicule selon l'une des revendications précédentes, **caractérisé en ce que** plusieurs capteurs (20) qui détectent une modification d'un champ électromagnétique sont disposés dans l'espace creux (140), dont les signaux sont interprétés par l'unité de commande (40).

7. Véhicule selon l'une des revendications précédentes, **caractérisé en ce que** l'unité de commande (40) est configurée pour recevoir et interpréter les signaux de capteurs supplémentaires (110).

8. Véhicule selon la revendication 7, **caractérisé en ce que** l'unité de commande (40) est configurée pour déclencher des fonctions de protection des piétons du véhicule en fonction des signaux de l'au moins un capteur (20) et des signaux des capteurs supplémentaires (110).
